# EUROPEAN PATENT APPLICATION

(11) **EP 4 653 912 A1**
(43) Date of publication of application: **26.11.2025**
(21) Application number: 24217112.2
(22) Date of filing: 03.12.2024
(51) Int. Cl.: G01S 7/48, G01S 17/931, G06V 20/58, B60W 60/00

(54) **APPARATUS FOR CONTROLLING VEHICLE AND METHOD THEREOF**

(30) Priority: 24.05.2024 KR 20240068048
(71) Applicant: Hyundai Motor Company, Seoul 06797 (KR); Kia Corporation, Seocho-gu Seoul 06797 (KR)
(72) Inventor: NOH, Mi Rim, 18280 Hwaseong-si, Gyeonggi-do (KR)
(74) Representative: Viering, Jentschura & Partner mbB Patent- und Rechtsanwälte

(57) **Abstract**

An apparatus for controlling autonomous driving of a vehicle may comprise a sensor that obtains virtual boxes corresponding to a plurality of external objects, and a processor. The processor may identify an interest virtual box from these virtual boxes based on factors such as the vehicle's operating state, the external object's location, or the size of the corresponding virtual box. The processor may determine a first distribution of contour points, centered on the interest virtual box, in a first coordinate system and a second distribution of the contour points in a second coordinate system, centered on the contour points. The interest virtual box may be validated based on criteria such as its heading direction, location, and the distributions of contour points. Based on this validation, the processor may determine whether to output the interest virtual box, generates a signal, and controls autonomous driving based on the signal.

## Description

### CROSS-REFERENCE TO RELATED APPLICATION

This application claims the benefit of priority to Korean Patent Application No. 10-2024-0068048, filed in the Korean Intellectual Property Office on May 24, 2024, the entire contents of which are incorporated herein by reference.

### TECHNICAL FIELD

The present disclosure relates to an apparatus for controlling a vehicle and a method thereof, and more particularly, relates to a technology for tracking an object by using light detection and ranging (LiDAR).

### BACKGROUND

The matters described in this Background section are only for enhancement of understanding of the background of the disclosure, and should not be taken as acknowledgement that they correspond to prior art already known to those skilled in the art.

Various studies for identifying an external object by using various sensors are being conducted to assist the driving of a vehicle.

In particular, while operating in a driving assistance mode or an autonomous driving mode, the vehicle may identify the external object by using a sensor (e.g., LiDAR).

If the vehicle identifies the external object through the LiDAR, the external object identified by the LiDAR may be incorrectly identified. Accordingly, various studies are being conducted to solve the issues.

### SUMMARY

According to the present disclosure, an apparatus for controlling autonomous driving of a vehicle, the apparatus may comprise a sensor configured to obtain virtual boxes respectively corresponding to a plurality of external objects, and a processor configured to determine an interest virtual box among the virtual boxes based on at least one of an operating state of the vehicle, a location of an external object, or a size of a virtual box corresponding to the external object, determine a first distribution of contour points, in a first coordinate system, that forms the interest virtual box, wherein the first coordinate system is centered on the interest virtual box, determine a second distribution of the contour points, in a second coordinate system, wherein the second coordinate system is centered on the contour points, validate the interest virtual box based on at least one of a heading direction of the interest virtual box within a designated frame, a location of the interest virtual box, the first distribution, or the second distribution, determine, based on the validation, whether to output the interest virtual box, generate a signal indicating the interest virtual box, and control, based on the signal, the autonomous driving of the vehicle.

The apparatus, wherein the processor is configured to form the second coordinate system based on a minimum value of x-axis of a vehicle coordinate system of the contour points, a minimum value of y-axis of the vehicle coordinate system, a maximum value of the x-axis of the vehicle coordinate system, and a maximum value of the y-axis of the vehicle coordinate system, and wherein the vehicle coordinate system is configured to be centered on the vehicle, wherein the x-axis corresponds to a longitudinal axis of the vehicle, and wherein the y-axis is perpendicular to the x-axis and corresponds to a transverse axis of the vehicle.

The apparatus, wherein the processor is configured to determine the interest virtual box based on the vehicle being driven in a straight line, the virtual box being located within a region of interest (ROI), a width of the virtual box exceeding a first length, and a length of the virtual box exceeding a second length.

The apparatus, wherein the processor is configured to determine the virtual box corresponding to the external object within the ROI, wherein the ROI is spaced from a front of the vehicle by a first distance and spaced from a side of the vehicle by a second distance.

The apparatus, wherein the processor is configured to form the first coordinate system based on an angle between the heading direction of the interest virtual box and a vehicle coordinate system centered on the vehicle.

The apparatus, wherein the processor is configured to determine whether to output the interest virtual box based on an angle between a first heading direction of the interest virtual box in a frame and a second heading direction of the interest virtual box in a next frame exceeding a designated angle.

The apparatus, wherein the processor is configured to determine, based on the external object driving in a straight line, whether to output the interest virtual box, wherein the interest virtual box corresponds to the external object.

The apparatus, wherein the processor is configured to determine that the external object is driving in the straight line based on an absolute longitudinal speed of the external object being greater than or equal to a designated speed and a representative point included in the interest virtual box moving in a specific direction along a specific trajectory during a plurality of frames.

The apparatus, wherein a plurality of layers are formed by planes parallel to an x-y plane, wherein the x-y plane is formed by x-axis and y-axis, wherein the x-axis corresponds to a longitudinal axis of the vehicle and perpendicular to the y-axis, wherein the y-axis corresponds to a transverse axis of the vehicle, wherein a number of the plurality of layers is a designated number, wherein the plurality of layers comprise the interest virtual box, and wherein the processor is configured to identify at least one of the first distribution in each of the plurality of layers or the second distribution in each of the plurality of layers.

The apparatus, wherein the processor is configured to validate, based on hysteresis of the interest virtual box, the heading direction of the interest virtual box.

According to the present disclosure, a method performed by an apparatus for controlling autonomous driving of a vehicle, the method may comprise determining an interest virtual box among virtual boxes based on at least one of an operating state of the vehicle, a location of an external object, or a size of a virtual box corresponding to the external object, wherein the virtual boxes correspond to a plurality of external objects, determining a first distribution of contour points, in a first coordinate system, that form the interest virtual box, wherein the first coordinate system is centered on the interest virtual box, determining a second distribution of the contour points, in a second coordinate system, wherein the second coordinate system is centered on the contour points, validating the interest virtual box based on at least one of a heading direction of the interest virtual box within a designated frame, a location of the interest virtual box, the first distribution, and determining, based on the validation, whether to output the interest virtual box, generating a signal indicating the interest virtual box, and controlling, based on the signal, the autonomous driving of the vehicle.

The method may further comprise forming the second coordinate system based on a minimum value of x-axis of a vehicle coordinate system of the contour points, a minimum value of y-axis of the vehicle coordinate system, a maximum value of the x-axis of the vehicle coordinate system, and a maximum value of the y-axis of the vehicle coordinate system, wherein the vehicle coordinate system is configured to be centered on the vehicle, and wherein the x-axis corresponds to a longitudinal axis of the vehicle, and wherein the y-axis is perpendicular to the x-axis and corresponds to a transverse axis of the vehicle.

The method may further comprise determining the interest virtual box based on the vehicle being driven in a straight line, the virtual box being located within a region of interest (ROI), a width of the virtual box exceeding a first length, and a length of the virtual box exceeding a second length.

The method may further comprise determining the virtual box corresponding to the external object within the ROI, wherein the ROI is spaced from a front of the vehicle by a first distance and spaced from a side of the vehicle by a second distance.

The method may further comprise forming the first coordinate system based on an angle between the heading direction of the interest virtual box and a vehicle coordinate system centered on the vehicle.

The method may further comprise determining whether to output the interest virtual box, based on an angle between a first heading direction of the interest virtual box in a frame and a second heading direction of the interest virtual box in a next frame exceeding a designated angle.

The method may further comprise determining, based on the external object driving in a straight line, whether to output the interest virtual box, wherein the interest virtual box corresponds to the external object.

The method may further comprise determining that the external object is driving in the straight line based on an absolute longitudinal speed of the external object being greater than or equal to a designated speed and a representative point included in the interest virtual box moving in a specific direction along a specific trajectory during a plurality of frames.

The method, wherein a plurality of layers are formed by planes parallel to a x-y plane, wherein the x-y plane is formed by x-axis and y-axis, wherein the x-axis corresponds to a longitudinal axis of the vehicle and perpendicular to the y-axis, wherein the y-axis corresponds to a transverse axis of the vehicle, wherein a number of the plurality of layers is a designated number, wherein the plurality of layers comprise the interest virtual box, may further comprise identifying at least one of the first distribution in each of the plurality of layers or the second distribution in each of the plurality of layers.

The method may further comprise validating, based on hysteresis of the interest virtual box, the heading direction of the interest virtual box.

### BRIEF DESCRIPTION OF THE DRAWINGS

The above and other objects, features and advantages of the present disclosure will be more apparent from the following detailed description taken in conjunction with the accompanying drawings:
FIG. 1 shows an example of a block diagram associated with a vehicle control apparatus, according to an example of the present disclosure;
FIG. 2 shows an example of a flowchart associated with a vehicle control method, according to an example of the present disclosure;
FIG. 3 shows an example associated with a condition for determining an interest virtual box, in an example of the present disclosure;
FIG. 4 shows an example of obtaining a distribution of contour points in an example of the present disclosure;
FIG. 5 shows an example of determining whether an external object is driving in a straight line, in an example of the present disclosure;
FIG. 6 shows an example of a flowchart associated with a vehicle control method, according to an example of the present disclosure;
FIG. 7 shows an example of a flowchart associated with a vehicle control method, according to an example of the present disclosure;
FIG. 8 shows an example of a flowchart associated with a vehicle control method, according to an example of the present disclosure;
FIG. 9 shows an example of a flowchart associated with a vehicle control method, according to an example of the present disclosure;
FIG. 10 shows an example of a flowchart associated with a vehicle control method, according to an example of the present disclosure; and
FIG. 11 shows an example of a computing system associated with a vehicle control apparatus or vehicle control method, according to an example of the present disclosure.

### DETAILED DESCRIPTION

Hereinafter, some examples of the present disclosure will be described in detail with reference to the accompanying drawings. In adding reference numerals to components of each drawing, it should be noted that the same components include the same reference numerals, although they are indicated on another drawing. Furthermore, in describing the examples of the present disclosure, detailed descriptions associated with well-known functions or configurations will be omitted if they may make subject matters of the present disclosure unnecessarily obscure.

In describing elements of an example of the present disclosure, the terms first, second, A, B, (a), (b), and the like may be used herein. These terms are only used to distinguish one element from another element, but do not limit the corresponding elements irrespective of the nature, order, or priority of the corresponding elements. Furthermore, unless otherwise defined, all terms including technical and scientific terms used herein are to be interpreted as is customary in the art to which the present disclosure belongs. It will be understood that terms used herein should be interpreted as including a meaning that is consistent with their meaning in the context of the present disclosure and the relevant art and will not be interpreted in an idealized or overly formal sense unless expressly so defined herein.

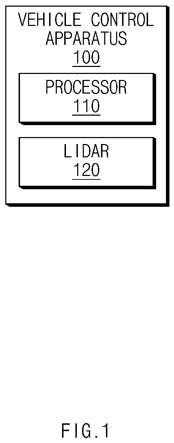

Hereinafter, examples of the present disclosure will be described in detail with reference to FIGS. 1 to 11.

FIG. 1 shows an example of a block diagram associated with a vehicle control apparatus, according to an example of the present disclosure.

Referring to FIG. 1, a vehicle control apparatus 100 according to an example of the present disclosure may be implemented inside or outside a vehicle, and some of components included in the vehicle control apparatus 100 may be implemented inside or outside the vehicle. At this time, the vehicle control apparatus 100 may be integrated with internal control units of a vehicle and may be implemented with a separate device so as to be coupled with control units of the vehicle by means of a separate connection means. For example, the vehicle control apparatus 100 may further include components not shown in FIG. 1.

The vehicle control apparatus 100 according to an example may include a processor 110 and a LiDAR 120. The processor 110 or the LiDAR 120 may be electronically and/or operably coupled with each other by an electronical component including a communication bus.

Hereinafter, the fact that pieces of hardware are coupled operably may include the fact that a direct and/or indirect connection between the pieces of hardware is established by wired and/or wirelessly such that second hardware is controlled by first hardware among the pieces of hardware.

Although different blocks are shown, an example is not limited thereto. For example, some of the pieces of hardware in FIG. 1 may be included in a single integrated circuit including a system on chip (SoC). The type and/or number of hardware included in the vehicle control apparatus 100 is not limited to that shown in FIG. 1. For example, the vehicle control apparatus 100 may include only some of the pieces of hardware shown in FIG. 1.

The vehicle control apparatus 100 according to an example may include hardware for processing data based on one or more instructions. The hardware for processing data may include the processor 110.

For example, the hardware for processing data may include an arithmetic and logic unit (ALU), a floating point unit (FPU), a field programmable gate array (FPGA), a central processing unit (CPU), and/or an application processor (AP). The processor 110 may include a structure of a single-core processor, or may include a structure of a multi-core processor including a dual core, a quad core, a hexa core, or an octa core.

The vehicle control apparatus 100 according to an example may include a depth sensor for identifying or determining an external object. For example, the depth sensor for identifying or determining an external object may include the LiDAR 120.

For example, the LiDAR 120 may obtain data sets obtained by identifying or determining objects surrounding the vehicle control apparatus 100 (or a vehicle including the vehicle control apparatus 100) . For example, the LiDAR 120 may identify or determine at least one of a location of the surrounding object, a movement direction of the surrounding object, or the speed of the surrounding object, or any combination thereof based on a pulse laser signal emitted from the LiDAR 120 being reflected and returned by the surrounding object.

For example, the LiDAR 120 may obtain virtual boxes respectively corresponding to a plurality of external objects. For example, the processor 110 may obtain virtual boxes respectively corresponding to the plurality of external objects through the LiDAR 120.

For example, the processor 110 may create a virtual box corresponding to an external object by using the plurality of points obtained through the LiDAR 120. For example, the virtual box may be referred to as at least one of a "meta box", a "track box", or a "bounding box", or any combination thereof. However, an example is not limited thereto. In the context of autonomous driving, virtual boxes may refer to bounding boxes or virtual representations that are used to define the approximate space occupied by external objects detected by the vehicle's sensors (such as cameras, LiDAR, or radar). These virtual boxes may be aligned with a 3D coordinate system (e.g., x, y, and z axes) and may be projected around objects in the environment, such as pedestrians, other vehicles, cyclists, or obstacles, to help the autonomous system understand their positions, sizes, and movement. The autonomous system may use these boxes to track the movement of objects over time, allowing it to predict their future trajectories. This tracking capability may be applied for collision avoidance, as the system may determine distances and evaluate potential risks of collisions, enabling it to take actions like braking or steering to avoid obstacles. Further, virtual boxes may provide useful spatial information for path planning, helping the vehicle adjust its route to maintain safe distances from surrounding objects and navigate through complex environments. The virtual boxes may provide a simplified geometric representation of real-world objects, allowing the autonomous driving system to process and respond to its surroundings efficiently.

In an example, the processor 110 may determine an interest virtual box among virtual boxes based on at least one of an operating state of a vehicle, a location of the external object, or a size of the virtual box corresponding to the external object, or any combination thereof. The interest virtual box may refer to a specific virtual box that the processor 110 identify or determine as particularly relevant or significant out of the many virtual boxes representing external objects around the vehicle. The processor may make this determination based on several factors, such as the vehicle's operating state (e.g., speed, direction), the location of the external object (how close or relevant it is to the vehicle's path), or the size of the virtual box (which may indicate the type of object, such as a large vehicle versus a pedestrian). In other words, the interest virtual box may be a virtual representation of an object that the autonomous driving system deems important enough to focus on for decision-making, whether for collision avoidance, path planning, or any other driving-related tasks. The interest virtual box may help prioritize certain objects over others based on the situation and how they interact with the vehicle's environment.

In an example, the processor 110 may determine the corresponding virtual box as an interest virtual box based on the fact that the vehicle is driving in a straight line, the virtual box is located within a region of interest (ROI), a width of the virtual box exceeds a first length, and a length of the virtual box exceeds a second length. For example, an ROI may comprise a specific area within an image, video, or dataset that may be selected for detailed analysis or processing, for example, due to its relevance to the task at hand.

For example, the first length may be the same as or different from the second length. For example, the first length may include approximately 1 meter (m). For example, the second length may include approximately 1 m.

For example, the processor 110 may identify or determine the ROI, which is spaced from the front of the vehicle by a first distance and which is spaced from the side of the vehicle by a second distance. For example, the first distance may include approximately 1 m. For example, the second distance may include approximately 9 m.

For example, the ROI may include a lane in which the vehicle is driving, and a lane spaced by two lanes from the lane in which the vehicle is driving.

In an example, the processor 110 may identify or determine a first distribution in a first coordinate system of contour points forming an interest virtual box in the first coordinate system centered on the interest virtual box. The first distribution may refer to spatial arrangement or pattern of contour points in the first coordinate system that defines the shape and boundaries of the interest virtual box. These contour points may outline the edges or surface of the virtual box in the 3D space, which helps the processor understand the precise location and dimensions of the interest virtual box in the first coordinate system. For example, the contour points may be spread out to form the complete representation of the virtual box. The processor 110 may use this distribution of the contour points to create a detailed and accurate model of the interest virtual box, which is centered within the first coordinate system, allowing the autonomous driving system to track and evaluate the interest virtual box and the object it represents within the environment.

For example, the processor 110 may form the first coordinate system based on the heading direction of the interest virtual box.

For example, the processor 110 may form the first coordinate system based on an angle between the heading direction of the interest virtual box and the vehicle coordinate system centered on the vehicle.

For example, the processor 110 may generate the first coordinate system in which the heading direction of the interest virtual box (e.g., a driving direction of a vehicle) is a positive direction of the x-axis. For example, the processor 110 may create a second coordinate system including a y-axis perpendicular to the heading direction of the interest virtual box. For example, the positive direction of the y-axis of the second coordinate system may be at least partially the same as the positive direction of the y-axis of the vehicle coordinate system.

For example, the processor 110 may identify or determine at least one of a first distribution, or a second distribution, or any combination thereof in each of layers, of which the number is the designated number and which include the interest virtual box, from among a plurality of layers formed based on the z-axis among the x-axis, the y-axis, and the z-axis. For example, the designated number may include approximately 6.

For example, the processor 110 may identify or determine a plurality of layers formed by planes perpendicular to the z-axis, based on the z-axis among the x-axis, the y-axis, and the z-axis.

For example, the processor 110 may identify or determine the first distribution and the second distribution in each of the plurality of layers.

In an example, the processor 110 may identify or determine the second distribution in the second coordinate system of the contour points in the second coordinate system centered on the contour points. The second distribution may refer to the spatial arrangement or organization of contour points within the second coordinate system. Similar to the first distribution, which represents the layout of contour points in the first coordinate system, the second distribution may define how those points are arranged in the second coordinate system. The second coordinate system may be defined relative to the heading direction of the interest virtual box (such as the direction in which a detected object is moving) and aligned with axes that may differ from the first coordinate system, particularly with the y-axis perpendicular to the heading direction. Thus, the second distribution may describe the layout or configuration of the contour points of the interest virtual box as they appear in the second coordinate system, helping the processor understand the object's shape and orientation relative to a different set of reference axes. The processor may use this information to track, model, or predict object behavior in a more comprehensive way by leveraging multiple coordinate systems and distributions.

In an example, the processor 110 may identify or determine coordinate values of contour points in the vehicle coordinate system.

For example, the vehicle coordinate system may be formed to be centered on the vehicle. For example, the vehicle coordinate system may include a coordinate system that uses the front center point of the vehicle as the origin. For example, the vehicle coordinate system may set an axis, which is perpendicular to the front surface of the vehicle based on the front center point of the vehicle and which corresponds to the traveling direction of the vehicle, as the x-axis. For example, the vehicle coordinate system may set an axis, which is parallel to the front surface of the vehicle based on the front center point of the vehicle, as the y-axis.

For example, the vehicle coordinate system may include the x-axis on which an x-value increases in the traveling direction of the vehicle, the y-axis on which a y-value increases in the left direction of the vehicle, and the z-axis on which a z-value increases in the vertical direction of the vehicle.

For example, the processor 110 may identify or determine a minimum x-value of contour points in the vehicle coordinate system.

For example, the processor 110 may identify or determine a minimum y-value of contour points in the vehicle coordinate system.

For example, the processor 110 may identify or determine a maximum x-value of contour points in the vehicle coordinate system.

For example, the processor 110 may identify or determine a maximum y-value of contour points in the vehicle coordinate system.

For example, the processor 110 may form the second coordinate system based on the minimum x-value of contour points, the minimum y-value of contour points, the maximum x-value of contour points, and the maximum y-value of contour points in the vehicle coordinate system.

For example, the second coordinate system may include the minimum x-value of contour points, the minimum y-value of contour points, the maximum x-value of contour points, and the maximum y-value of contour points, and may include an x'-axis parallel to the x-axis of the vehicle coordinate system, and a y'-axis parallel to the y-axis of the vehicle coordinate system.

For example, the processor 110 may determine the center point of the second coordinate system based on an average value of the minimum x-value of contour points, the minimum y-value of contour points, the maximum x-value of contour points, and the maximum y-value of contour points.

In an example, the processor 110 may perform validation on an interest virtual box based on at least one of a heading direction of an interest virtual box within a designated frame, a location of the interest virtual box, a first distribution, or a second distribution, or any combination thereof. For example, the validation may involve checking the object's heading direction (its movement or orientation) within a specific frame (moment in time). This may ensure that the heading direction is consistent with the expected behavior of the object, such as moving in a plausible trajectory or direction based on the vehicle's context. The validation may evaluate the position of the virtual box in space relative to the vehicle and other objects. Validation in this case may check whether the object's location is within a logical range or whether it has been correctly positioned based on sensor data. The validation may also involve analyzing the spatial arrangement of contour points that form the interest virtual box in the first coordinate system. The validation may check whether the distribution of points makes sense in terms of object shape, size, and positioning, ensuring the object is correctly detected in this coordinate system. Similarly, the validation may evaluate the contour points in the second coordinate system, which might involve a different orientation or axis setup. Validation of the second distribution may ensure consistency across multiple coordinate systems, further confirming the object's geometry and behavior. The validation may ensure that the interest virtual box accurately represents an external object. Misidentified objects or incorrect bounding boxes may lead to faulty decisions. By validating across different frames, heading directions, and distributions, the processor 110 may check for consistency in how the object is detected over time and across different systems. Proper validation may allow the autonomous driving system to trust that the identified virtual box is reliable, enabling safe decisions, such as avoiding collisions or planning paths. In other words, the validation helps the processor 110 confirm that the data surrounding the interest virtual box is both valid and reliable, improving the safety and accuracy of the autonomous vehicle's responses to its environment.

In an example, the processor 110 may perform validation on the heading direction of the interest virtual box based on the hysteresis of the interest virtual box. The hysteresis of the interest virtual box may refer to the processor's method of considering past heading directions to validate and stabilize the current heading direction, reducing sensitivity to minor, short-term fluctuations in the data. the processor uses hysteresis to smooth out or stabilize the tracking of the virtual box's heading direction. This means that if the virtual box (representing an external object) shows small or momentary fluctuations in its heading direction (due to noise in sensor data or other transient factors), the autonomous driving system may not immediately respond to these minor changes. Instead, it may factor in the history of the object's heading direction to avoid reacting to insignificant or temporary shifts.

In an example, the processor 110 may determine whether to output the interest virtual box, based on the validation on the interest virtual box.

In an example, the processor 110 may assign an identifier indicating the validation result of the interest virtual box to the interest virtual box based on the validation on the interest virtual box.

In an example, the processor 110 may determine whether an angle between a first heading direction of the interest virtual box in the (t-1)-th frame and a second heading direction of the interest virtual box in the t-th frame exceeds the designated angle.

For example, the designated angle may include approximately 20 degrees.

For example, the processor 110 may determine whether to output the interest virtual box, based on whether the angle between the first heading direction of the interest virtual box in the (t-1)-th frame and the second heading direction of the interest virtual box in the t-th frame exceeds the designated angle.

For example, if the angle between the first heading direction of the interest virtual box in the (t-1)-th frame and the second heading direction of the interest virtual box in the t-th frame exceeds the designated angle, the processor 110 may not output the interest virtual box.

For example, if the angle between the first heading direction of the interest virtual box in the (t-1)-th frame and the second heading direction of the interest virtual box in the t-th frame does not exceed the designated angle, the processor 110 may output the interest virtual box.

The case where the angle between the first heading direction of the interest virtual box in the (t-1)-th frame and the second heading direction of the interest virtual box in the t-th frame does not exceed the designated angle indicates that the interest virtual box is currently driving on a normal path. In this case, if the angle between the first heading direction of the interest virtual box in the (t-1)-th frame and the second heading direction of the interest virtual box in the t-th frame does not exceed the designated angle, the processor 110 may output the interest virtual box or may assign the identifier indicating that there is no error in the interest virtual box.

In an example, the processor 110 may determine whether to output an interest virtual box corresponding to an external object, based on whether the external object is driving in a straight line.

For example, if the heading direction of the interest virtual box is not parallel to the x-axis of the vehicle coordinate system, but the interest virtual box is driving to be parallel to the x-axis of the vehicle coordinate system, the processor 110 may identify or determine that the external object is driving in a straight line, determines that the heading direction of the interest virtual box is incorrect, and may not output the interest virtual box.

For example, the processor 110 may identify or determine that the interest virtual box is driving in a straight line, based on the absolute longitudinal speed of the external object being greater than or equal to a designated speed, and a representative point included in the interest virtual box being moving in a specific direction along a specific trajectory during a plurality of frames.

For example, the designated speed may include approximately 30 km/h.

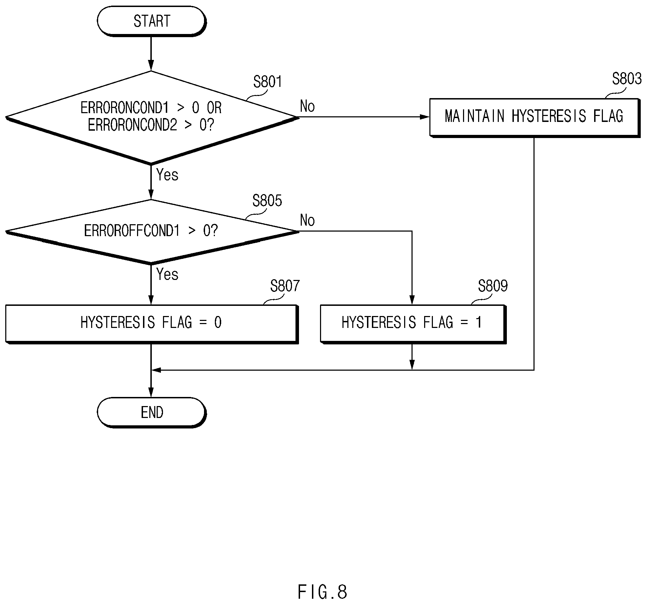

In an example, the processor 110 may perform validation on the heading direction of the interest virtual box based on the hysteresis of the interest virtual box. For example, the processor 110 may perform validation on the heading direction of the interest virtual box based on a hysteresis flag assigned to the interest virtual box. Descriptions thereof are given later with reference to FIG. 8.

As mentioned above, the processor 110 of the vehicle control apparatus 100 according to an example may determine whether to output the interest virtual box, based on the validation on the interest virtual box. The processor 110 may output a virtual box that relatively accurately indicates the heading direction of the external object by outputting the interest virtual box based on the above-described validation. If controlling the vehicle, the vehicle control apparatus 100 may control the vehicle relatively stable by outputting the virtual box that accurately indicates the heading direction of the external object.

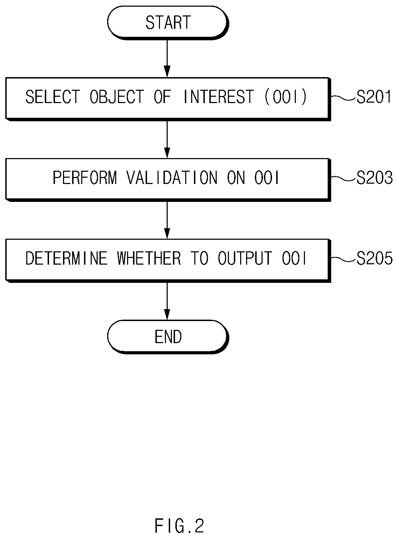

FIG. 2 shows an example of a flowchart associated with a vehicle control method, according to an example of the present disclosure.

Hereinafter, it is assumed that the vehicle control apparatus 100 of FIG. 1 performs the process of FIG. 2. In addition, in a description of FIG. 2, it may be understood that an operation described as being performed by an apparatus is controlled by the processor 110 of the vehicle control apparatus 100.

At least one of operations of FIG. 2 may be performed by the vehicle control apparatus 100 of FIG. 1. At least one of operations of FIG. 2 may be performed by the processor 110 of FIG. 1. Each of the operations in FIG. 2 may be performed sequentially, but is not necessarily sequentially performed. For example, the order of operations may be changed, and at least two operations may be performed in parallel.

Referring to FIG. 2, in S201, the vehicle control method according to an example may include an operation of selecting an object of interest (OOI).

The vehicle control method may include an operation of selecting the OOI under a designated condition. For example, the OOI may include the interest virtual box described in FIG. 1.

For example, the designated condition may be associated with at least one of an operating state of the vehicle, whether the OOI is located within an ROI, or the size of the OOI, or any combination thereof.

For example, the operating state of the vehicle may be associated with whether the vehicle is driving in a straight line. For example, the case where the designated condition associated with the operating state of the vehicle is satisfied may include the case where the vehicle is driving in a straight line. For example, the case where the designated condition associated with the operating state of the vehicle is not satisfied may include the case where the vehicle is not driving in a straight line.

For example, the case where the designated condition associated with whether the OOI is located within the ROI is satisfied may include the case where the OOI is located within the ROI. For example, the case where the designated condition associated with whether the OOI is located within the ROI is not satisfied may include the case where the OOI is not located within the ROI. For example, the ROI may include a virtual rectangle formed with a longitudinal distance of the vehicle of about 1 m to about 80 m, and a lateral distance of about 9 m between the left and right of the vehicle.

For example, the case where the designated condition associated with the size of the OOI is satisfied may include the case where the size of the OOI exceeds the designated size. The case where the designated condition associated with the size of the OOI is not satisfied may include the case where the size of the OOI is smaller than or equal to the designated size. For example, the designated size may include a width of approximately 1 m, and a length of approximately 1 m.

In S203, the vehicle control method according to an example may include an operation of performing validation on the OOI.

For example, the vehicle control method may include an operation of assigning a flag to the OOI based on at least one of the matching between a contour shape and a shape of a virtual box, a heading direction of the virtual box, or a location change of the OOI, or any combination thereof.

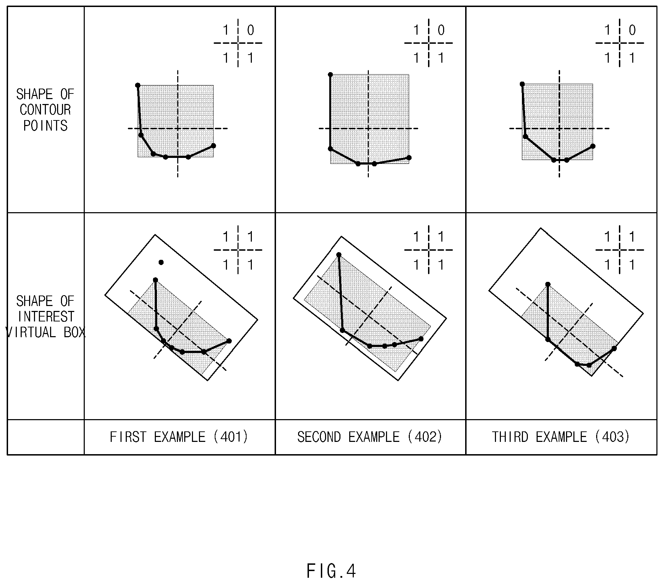

For example, the matching between the contour shape and the shape of the virtual box may be identified based on the distribution of contour points in the coordinate system formed by the contour points, and the distribution of contour points in the coordinate system formed by the heading direction of the virtual box. Descriptions associated with the matching between the contour shape and the shape of the virtual box will be given later with reference to FIG. 4.

For example, the vehicle control method may include an operation of assigning a matching flag to the OOI based on the fact that the matching between the contour shape and the shape of the virtual box is not satisfied.

For example, the vehicle control method may perform validation on the OOI based on whether the heading direction of the OOI changes suddenly.

For example, the vehicle control method may include an operation of identifying or determining that the heading direction of the OOI is unstable, based on that fact that the heading direction of OOI in the previous frame is not 0 degrees, an angle difference between the heading direction of the OOI in the current frame and the heading direction of the OOI in the previous frame exceeds a threshold angle, and the match flag is not 1. For example, the threshold angle may include approximately 20 degrees.

For example, the vehicle control method may include an operation of identifying or determining that the heading direction of the OOI is unstable, based on the fact that the heading direction of the OOI in the previous frame is not 0 degrees, and the product of a heading direction value of the OOI in the current frame and a heading direction value of the OOI in the previous frame is not 0.

For example, if the heading direction of OOI is unstable, the vehicle control method may include the operation of assigning a heading instability flag to the OOI.

For example, the vehicle control method may include an operation of performing validation on the OOI based on identifying or determining that the location change in the OOI corresponds to straight driving.

For example, the vehicle control method may include an operation of performing validation on the OOI based on at least one of a distance by which the OOI is moving, or a movement trajectory of the OOI, or any combination thereof.

For example, the vehicle control method may include an operation of assigning a location instability flag to the OOI based on identifying or determining the absolute longitudinal speed of the OOI being about 30 km/h or more, and a location change of the designated distance or less (e.g., approximately 0.5 m) during the designated frame (e.g., approximately 5 frames) .

For example, if a point capable of representing a location of the OOI is tracked, the vehicle control method may include an operation of determining whether the point rotates normally while drawing a specific trajectory in a specific direction, or the trajectory is abnormal in a zigzag shape. For example, the vehicle control method may include an operation of assigning the location instability flag to the OOI based on determining that the trajectory is abnormal in the zigzag shape while the point capable of representing the location of the OOI is tracked.

In S205, the vehicle control method according to an example may include an operation of determining whether to output the OOI.

For example, the vehicle control method may include an operation of checking the validity of the heading direction of the OOI in the current frame.

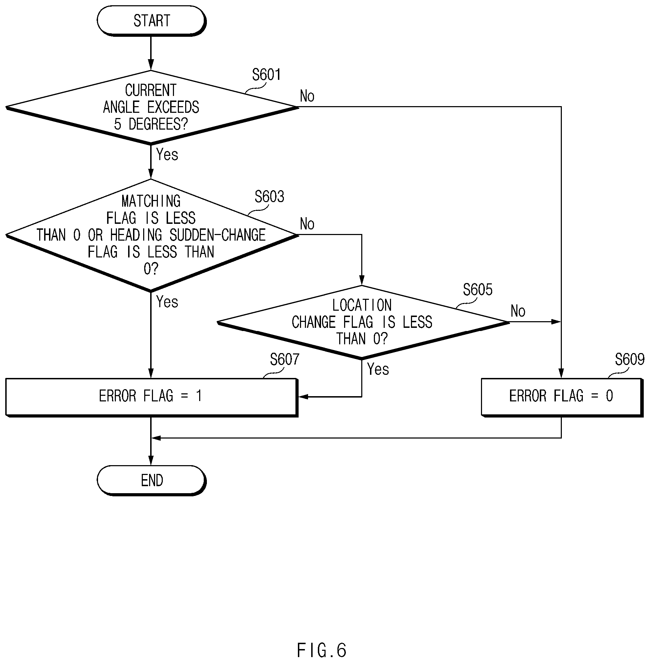

For example, the vehicle control method may include an operation of checking the validity of the heading direction of the OOI in the current frame based on the flag assigned to the OOI in S203. Descriptions of checking the validity of the heading direction of an OOI will be given later with reference to FIG. 6.

For example, the vehicle control method may include an operation of finally determining the validity of the heading direction of the OOI, based on hysteresis.

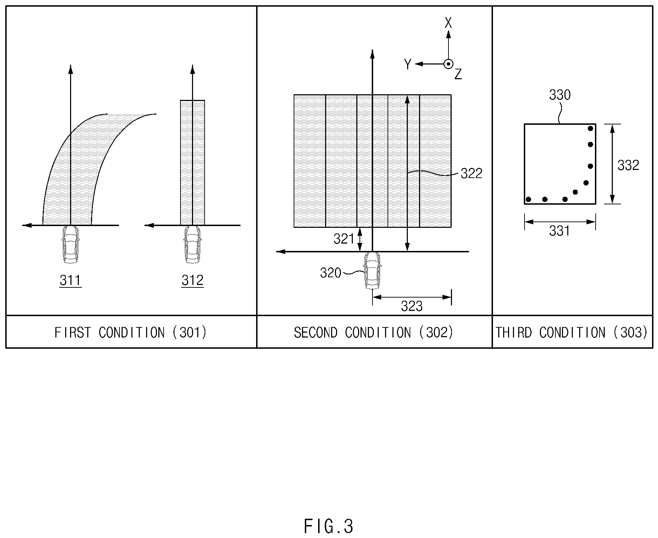

FIG. 3 shows an example associated with a condition for determining an interest virtual box, in an example of the present disclosure.

Referring to FIG. 3, a processor (e.g., the processor 110 in FIG. 1) of a vehicle control apparatus (e.g., the vehicle control apparatus 100 of FIG. 1) according to an example may determine an interest virtual box under a designated condition.

For example, the designated condition may include at least one of a first condition 301, a second condition 302, or a third condition 303, or any combination thereof.

For example, the first condition 301 may be associated with the operating state of a vehicle. A first example 311 of the first condition 301 may include a case where the vehicle is not driving in a straight line. A second example 312 of the first condition 301 may include a case where the vehicle is driving in a straight line. For example, the first example 311 of the first condition 301 may include the case where the first condition 301 is not satisfied. For example, the second example 312 of the first condition 301 may include the case where the first condition 301 is satisfied.

For example, the second condition 302 may be associated with an ROI. For example, the ROI may include a region in which a longitudinal distance from a vehicle 320 is between a first distance 321 and a second distance 322, and a lateral distance from the vehicle 320 is a third distance 323 from each of the left and right sides. For example, the first distance 321 may include approximately 1 m. For example, the second distance 322 may include approximately 80 m. For example, the third distance 323 may include approximately 9 m.

For example, the third condition 303 may be associated with the size of a virtual box 330. For example, the processor may determine the virtual box 330 of where a width 331 and a length 332 exceed a designated length, as an interest virtual box based on each of the width 331 and the length 332 of the virtual box 330 exceeding the designated length. For example, the designated length may include approximately 1 m.

FIG. 4 shows an example of obtaining a distribution of contour points in an example of the present disclosure.

Referring to FIG. 4, a processor (e.g., the processor 110 in FIG. 1) included in a vehicle control apparatus (e.g., the vehicle control apparatus 100 in FIG. 1) according to an example may identify or determine the distribution of contour points that form an interest virtual box.

For example, the processor may identify or determine the distribution of contour points in each of a plurality of layers. Each of a first example 401, a second example 402, and a third example 403 in FIG. 4 may include the distribution of contour points identified in each of a plurality of layers. The plurality of layers may refer to multiple 2D planes that are formed based on different positions along the z-axis in a 3D coordinate system. These planes are parallel to the x-y plane, meaning they extend in the horizontal (x) and vertical (y) directions, but are stacked along the z-axis, which introduces depth in the third dimension. Hereinafter, for convenience of description, the first example 401 is described. The contour points shown in the examples (401, 402, and 403) may represent projections of the points of an object (interest virtual box) onto these layers or planes. These contour points may define the shape of the interest virtual box at different levels or positions along the z-axis. Each row in FIG. 4 shows the distribution of contour points on respective layer, which form a specific shape for each example. The contour points correspond to parts of the external object as detected within a particular layer or plane. Each row shows the shape of the interest virtual box that is generated based on the contour points in each layer. The interest virtual box is the bounding area or volume that encloses the contour points identified across multiple layers, giving a 3D representation of the external object.

In an example, the processor may form a first coordinate system based on the heading direction of the interest virtual box. For example, the processor may form the first coordinate system based on an angle between the heading direction of the interest virtual box and the x-axis of a vehicle coordinate system.

For example, the processor may identify or determine a first distribution of contour points in a coordinate system formed by the angle between the heading direction of the interest virtual box and the x-axis of the vehicle coordinate system.

For example, the processor may identify or determine the first distribution of contour points by assigning an identifier indicating that a contour point is present in a quadrant in which the contour point is present.

In an example, the processor may identify or determine contour points that form the interest virtual box. For example, the processor may identify or determine the coordinate value of each of the contour points. For example, the processor may identify or determine four contour points with a minimum x-value, a minimum y-value, a maximum x-value, and a maximum y-value based on identifying or determining the coordinate value of each of the contour points.

For example, the processor may form a second coordinate system based on the average value of the minimum y-value, the maximum x-value, and the maximum y-value. For example, the processor may identify or determine the second distribution of contour points in a coordinate system formed by the minimum y-value, the maximum x-value, and the maximum y-value. For example, the processor may identify or determine the second distribution of contour points based on whether contour points are present in a quadrant of the coordinate system formed by the minimum y-value, the maximum x-value, and the maximum y-value.

For example, the processor may identify or determine the second distribution of contour points by assigning an identifier indicating that the contour point is present in the quadrant in which the contour point is present.

For example, the processor may compare the first distribution with the second distribution. For example, the processor may compare the first distribution with the second distribution based on the identifier assigned to each quadrant.

For example, the processor may compare the first distribution with the second distribution, and may identify or determine a mismatch count based on a quadrant in which the first distribution does not match the second distribution. For example, the mismatch count may mean the number of quadrants in each of which the first distribution does not match the second distribution.

For example, the processor may determine whether a size flag exceeds 0, based on the mismatch count being greater than or equal to the designated number (e.g., about 2). For example, the size flag may include a flag assigned if each of the width and length of the interest virtual box exceeds approximately 1.8 m.

For example, the processor may assign the match flag of -1 to the interest virtual box based on the size flag exceeding 0.

For example, the processor may identify or determine whether the match count is greater than or equal to the designated number (e.g., about 2), based on the size flag not exceeding 0. For example, the processor may assign the match flag of 1 to the interest virtual box based on the match count being greater than or equal to the designated number. For example, the processor may assign the match flag of 0 to the interest virtual box based on the match count not being greater than or equal to the designated number.

For example, the processor may determine whether the match count is greater than or equal to the designated number (e.g., about 2), based on the mismatch count not being greater than or equal to the designated number (e.g., about 2). For example, the processor may assign the match flag of 1 to the interest virtual box based on the match count being greater than or equal to the designated number. For example, the processor may assign the match flag of 0 to the interest virtual box based on the match count not being greater than or equal to the designated number.

As described above, the processor of the vehicle control apparatus according to an example may assign a match flag to the interest virtual box based on the first distribution and the second distribution. The assigning of the match flag to the interest virtual box may be included in performing validation on the interest virtual box.

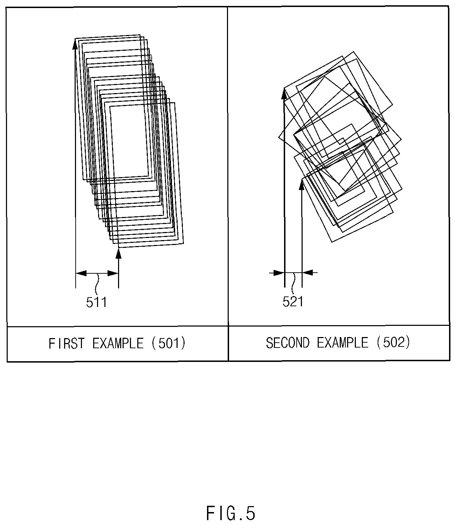

FIG. 5 shows an example of determining whether an external object is driving in a straight line, in an example of the present disclosure.

Referring to FIG. 5, a processor (e.g., the processor 110 in FIG. 1) included in a vehicle control apparatus (e.g., the vehicle control apparatus 100 in FIG. 1) according to an example may identify or determine a route (or trajectory) of an interest virtual box.

A first example 501 may include an example showing that the interest virtual box moves in a specific trajectory. A second example 502 may include an example showing that the interest virtual box does not move in the specific trajectory.

For example, in the first example 501, the processor may identify or determine a distance 511 at which a representative point of the interest virtual box moves during a designated frame (e.g., about 5 frames). For example, if the distance 511, at which the representative point of the interest virtual box moves, is greater than or equal to a designated distance (e.g., about 0.5 m) during the designated frame, the processor may assign a location change flag of 0 to the corresponding interest virtual box.

For example, in the second example 502, the processor may identify or determine a distance 521 at which a representative point of the interest virtual box moves during the designated frame. For example, if the distance 521, at which the representative point of the interest virtual box moves, is smaller than the designated distance during the designated frame, the processor may assign the location change flag of 1 to the corresponding interest virtual box.

For example, the location change flag may be associated with whether the interest virtual box moves stably. For example, the interest virtual box with the location change flag of 0 may include a virtual box moving stably. For example, the interest virtual box with the location change flag of 1 may include a virtual box moving unstable.

As described above, the processor of the vehicle control apparatus according to an example may perform validation on the interest virtual box by assigning a location change flag according to a change in a location of the interest virtual box.

FIG. 6 shows an example of a flowchart associated with a vehicle control method, according to an example of the present disclosure.

Hereinafter, it is assumed that the vehicle control apparatus 100 of FIG. 1 performs the process of FIG. 6. In addition, in a description of FIG. 6, it may be understood that an operation described as being performed by an apparatus is controlled by the processor 110 of the vehicle control apparatus 100.

At least one of operations of FIG. 6 may be performed by the vehicle control apparatus 100 of FIG. 1. At least one of operations of FIG. 6 may be performed by the processor 110 of FIG. 1. Each of the operations in FIG. 6 may be performed sequentially, but is not necessarily sequentially performed. For example, the order of operations may be changed, and at least two operations may be performed in parallel.

Referring to FIG. 6, in S601, the vehicle control method according to an example may include an operation of determining whether a current angle exceeds 5 degrees. For example, the vehicle control method may include an operation of determining whether a heading direction of an interest virtual box exceeds approximately 5 degrees.

For example, the vehicle control method may include an operation of determining whether the heading direction of the interest virtual box exceeds approximately 5 degrees, based on an x-axis of a vehicle coordinate system centered on a vehicle.

If the current angle exceeds 5 degrees (Yes in S601), in S603, the vehicle control method according to an example may include an operation of determining whether a matching flag is less than 0 or the heading sudden-change flag is less than 0.

If the current angle does not exceed 5 degrees (No in S601), in S609, the vehicle control method according to an example may include an operation of assigning an error flag of 0 to the interest virtual box.

If the matching flag is not less than 0, and the heading sudden-change flag is not less than 0 (No in S603), in S605, the vehicle control method according to an example may include an operation of determining whether the location change flag is less than 0.

If matching flag is less than 0 or the heading sudden-change flag is less than 0 (Yes in S603), in S607, the vehicle control method according to an example may include an operation of assigning the error flag of 1 to an interest virtual box.

If the location change flag is less than 0 (Yes in S603), in S607, the vehicle control method according to an example may include an operation of assigning an error flag 1 to an interest virtual box.

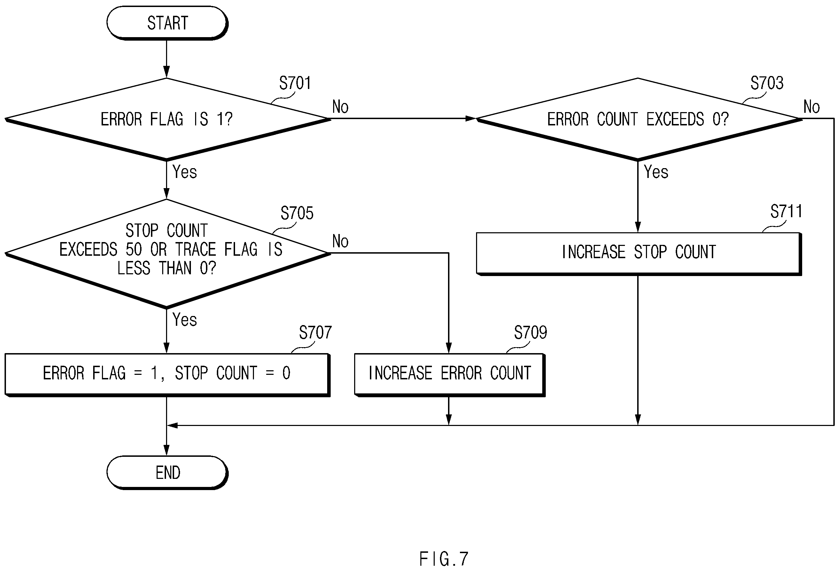

FIG. 7 shows an example of a flowchart associated with a vehicle control method, according to an example of the present disclosure.

Hereinafter, it is assumed that the vehicle control apparatus 100 of FIG. 1 performs the process of FIG. 7. In addition, in a description of FIG. 7, it may be understood that an operation described as being performed by an apparatus is controlled by the processor 110 of the vehicle control apparatus 100.

At least one of operations of FIG. 7 may be performed by the vehicle control apparatus 100 of FIG. 1. At least one of operations of FIG. 7 may be performed by the processor 110 of FIG. 1. Each of the operations in FIG. 7 may be performed sequentially, but is not necessarily sequentially performed. For example, the order of operations may be changed, and at least two operations may be performed in parallel.

Referring to FIG. 7, in S701, the vehicle control method according to an example may include an operation of determining whether an error flag is 1. For example, the vehicle control method may include an operation of determining whether the error flag 1 is assigned to an interest virtual box.

For example, the error flag may be assigned based on the operations in FIG. 6.

If the error flag is not 1 (No in S701), in S703, the vehicle control method according to an example may include an operation of determining whether an error count exceeds 0.

For example, the error count may include one of flags assigned to the interest virtual box.

If the error count exceeds 0 (Yes in S703), in S711, the vehicle control method according to an example may include an operation of increasing a stop count.

For example, the stop count may include one of flags assigned to the interest virtual box.

If the error count does not exceed 0 (No in S703), the vehicle control method according to an example may include an operation of terminating the corresponding process.

If the error flag is 1 (Yes in S701), in S705, the vehicle control method according to an example may include an operation of determining whether the stop count exceeds 50 or a trace flag is less than 0.

For example, whether the stop count exceeds 50 or the trace flag is less than 0 may include a condition for resetting the error count.

For example, the trace flag may include movement information of an external object that rotates.

For example, the trace flag may be associated with a lane change of the external object. For example, if it is determined that the external object changes a lane, the vehicle control method may include an operation of assigning the trace flag of - 1 to the interest virtual box corresponding to the corresponding external object.

If the stop count exceeds 50 or the trace flag is less than 0 (Yes in S705), in S707, the vehicle control method according to an example may include an operation of assigning the error flag of 1 and the stop count of 0.

For example, the stop count may include a flag indicating the number of times that the interest virtual box is continuously driving in a normal heading direction.

If the stop count does not exceed 50 and the trace flag is not less than 0 (No in S705), in S709, the vehicle control method according to an example may include an operation of increasing the error count.

FIG. 8 shows an example of a flowchart associated with a vehicle control method, according to an example of the present disclosure.

Hereinafter, it is assumed that the vehicle control apparatus 100 of FIG. 1 performs the process of FIG. 8. In addition, in a description of FIG. 8, it may be understood that an operation described as being performed by an apparatus is controlled by the processor 110 of the vehicle control apparatus 100.

At least one of operations of FIG. 8 may be performed by the vehicle control apparatus 100 of FIG. 1. At least one of operations of FIG. 8 may be performed by the processor 110 of FIG. 1. Each of the operations in FIG. 8 may be performed sequentially, but is not necessarily sequentially performed. For example, the order of operations may be changed, and at least two operations may be performed in parallel.

Referring to FIG. 8, in S801, the vehicle control method according to an example may include an operation of determining whether ErrorOncond1 exceeds 0 or ErrorOncond2 exceeds 0.

For example, ErrorOncond1 may be associated with a condition for determining whether a heading direction of an interest virtual box is continuous with the previous frame. For example, if the error flag in the previous frame is 1, the error flag in the current frame is 1, the error count is greater than or equal to 3, and the stop count is 0, ErrorOncond1 may be expressed as 1.

For example, ErrorOncond2 may be associated with whether there is a history of determining the interest virtual box in the past if the interest virtual box is determined in the current frame. For example, if the error count is greater than or equal to a threshold value, `1' may be assigned to ErrorOncond2. For example, the threshold value may be set to 3 if the interest virtual box is identified in the same lane as the vehicle. For example, the threshold value may be set to 5 if the interest virtual box is identified in a lane different from that of the vehicle.

If ErrorOncond1 exceeds 0, or ErrorOncond2 exceeds 0 (Yes in S801), in S805, the vehicle control method according to an example may include an operation of determining whether ErrorOFFcond1 exceeds 0.

For example, ErrorOFFcond1 may be associated with whether the heading direction of the interest virtual box is continuously identified in a normal direction. For example, if a stop count is greater than or equal to a threshold value, `1' may be assigned to ErrorOFFcond1. For example, if the interest virtual box is identified in the same lane as the vehicle, ErrorOFFcond1 may be set to 8. For example, if the interest virtual box is identified in a different lane from a lane of the vehicle, ErrorOFFcond1 may be set to 3.

If ErrorOFFcond1 exceeds 0 (Yes in S805), in S807, the vehicle control method according to an example may include an operation of assigning a hysteresis flag of 0 to the interest virtual box.

If ErrorOFFcond1 does not exceed 0 (No in S805), in S809, the vehicle control method according to an example may include an operation of assigning the hysteresis flag of 1 to the interest virtual box.

If ErrorOncond1 does not exceed 0 and ErrorOncond2 does not exceed 0 (No in S801), in S803, the vehicle control method according to an example may include an operation of maintaining the hysteresis flag.

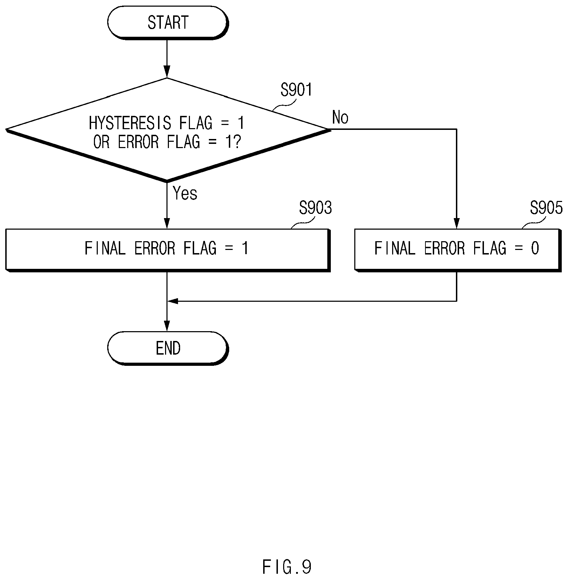

FIG. 9 shows an example of a flowchart associated with a vehicle control method, according to an example of the present disclosure.

Hereinafter, it is assumed that the vehicle control apparatus 100 of FIG. 1 performs the process of FIG. 9. In addition, in a description of FIG. 9, it may be understood that an operation described as being performed by an apparatus is controlled by the processor 110 of the vehicle control apparatus 100.

At least one of operations of FIG. 9 may be performed by the vehicle control apparatus 100 of FIG. 1. At least one of operations of FIG. 9 may be performed by the processor 110 of FIG. 1. Each of the operations in FIG. 9 may be performed sequentially, but is not necessarily sequentially performed. For example, the order of operations may be changed, and at least two operations may be performed in parallel.

Referring to FIG. 9, in S901, the vehicle control method according to an example may include an operation of determining whether a hysteresis flag is 1 or an error flag is 1.

For example, the hysteresis flag may be assigned based on the operations in FIG. 8.

If the hysteresis flag is 1 or the error flag is 1 (Yes in S901), in S903, the vehicle control method according to an example may include the operation of assigning the final error flag of 1 to an interest virtual box.

If the hysteresis flag is not 1 and the error flag is not 1 (No in S901), in S905, the vehicle control method according to an example may include an operation of assigning the final error flag of 0 to the interest virtual box.

As described above, the vehicle control method according to an example may include an operation of assigning a final error flag to the interest virtual box. The vehicle control method according to an example may include an operation of determining whether to output the interest virtual box, based on the final error flag assigned to the interest virtual box.

For example, the vehicle control method may include an operation of not outputting the interest virtual box to which the final error flag of 1 is assigned. For example, the vehicle control method may include the operation of outputting the interest virtual box to which the final error flag of 0 is assigned. For example, the vehicle control method may include an operation of controlling a vehicle based on whether the interest virtual box is output.

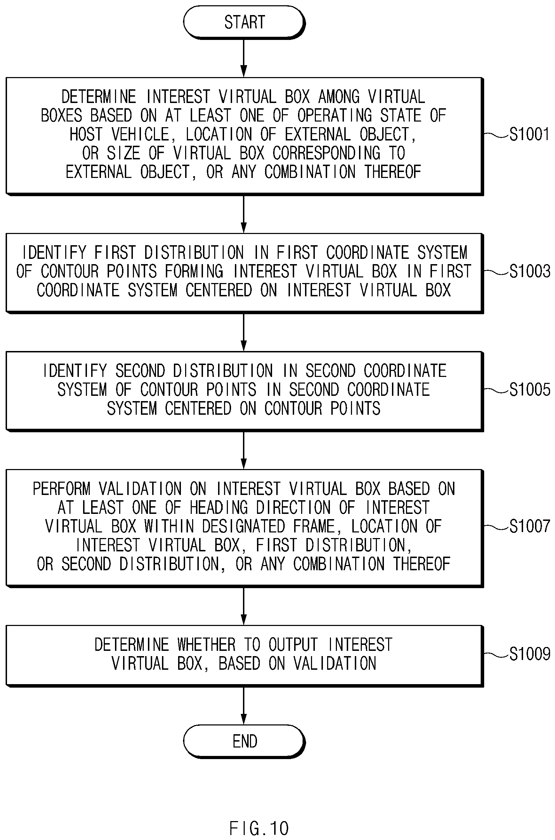

FIG. 10 shows an example of a flowchart associated with a vehicle control method, according to an example of the present disclosure.

Hereinafter, it is assumed that the vehicle control apparatus 100 of FIG. 1 performs the process of FIG. 10. In addition, in a description of FIG. 10, it may be understood that an operation described as being performed by an apparatus is controlled by the processor 110 of the vehicle control apparatus 100.

At least one of operations of FIG. 10 may be performed by the vehicle control apparatus 100 of FIG. 1. At least one of operations of FIG. 10 may be performed by the processor 110 of FIG. 1. Each of the operations in FIG. 10 may be performed sequentially, but is not necessarily sequentially performed. For example, the order of operations may be changed, and at least two operations may be performed in parallel.

Referring to FIG. 10, in S1001, the vehicle control method according to an example may include an operation of determining an interest virtual box among virtual boxes based on at least one of an operating state of a vehicle, a location of an external object, or a size of a virtual box corresponding to the external object, or any combination thereof.

For example, the vehicle control method may include an operation of determining the interest virtual box based on the vehicle being driving in a straight line, the virtual box being located within an ROI, a width of the virtual box exceeding a first length, and a length of the virtual box exceeding a second length.

For example, the vehicle control method may include an operation of identifying or determining the virtual box corresponding to the external object within the ROI, which is spaced from a front of the vehicle by a first distance and which is spaced from a side of the vehicle by a second distance. For example, the vehicle control method may include an operation of determining the identified virtual box as an interest virtual box based on identifying or determining a virtual box satisfying a designated condition within the ROI.

In S1003, the vehicle control method according to an example may include an operation of identifying or determining a first distribution in a first coordinate system of contour points forming the interest virtual box in the first coordinate system centered on the interest virtual box.

For example, the vehicle control method may include an operation of forming the first coordinate system based on an angle between the heading direction of the interest virtual box and a vehicle coordinate system centered on the vehicle. For example, the vehicle control method may include an operation of forming the first coordinate system tilted by an angle between the heading direction of the interest virtual box and an x-axis of a vehicle coordinate system based on the angle between the heading direction of the interest virtual box and the x-axis of the vehicle coordinate system.

In S1005, the vehicle control method according to an example may include an operation of identifying or determining a second distribution in a second coordinate system of the contour points in the second coordinate system centered on the contour points.

For example, the vehicle control method may include an operation of forming the second coordinate system based on a minimum x-value of a vehicle coordinate system of contour points, a minimum y-value of the vehicle coordinate system, a maximum x-value of the vehicle coordinate system, and a maximum y-value of the vehicle coordinate system. For example, the vehicle coordinate system may include a coordinate system centered on the vehicle.

For example, the vehicle control method may include an operation of identifying or determining at least one of the first distribution, or the second distribution, or any combination thereof in each of layers, of which a number is a designated number and which include the interest virtual box, from among a plurality of layers formed based on a z-axis among an x-axis, a y-axis, and the z-axis. For example, a set of layers may be formed by slicing the 3D space along the z-axis. Each layer may be viewed as a cross-sectional plane that captures a 2D "slice" of the object at a certain height (or z-axis). In each layer, the processor may identify or determine contour points, which are points outlining the shape of the object (interest virtual box) within that specific layer. The contour points in these layers may describe the boundary of the object at different heights along the z-axis. By combining the contour points from the different layers, the processor may be able to construct the overall shape of the interest virtual box. This may allow for a detailed 3D model of the object based on how it appears across multiple layers.

For example, the plurality of layers may include a plane parallel to the x-y plane formed by the x-axis and the y-axis. In other words, the plurality of layers may comprise multiple 2D slices (or planes) taken parallel to the x-y plane, spaced along the z-axis. These layers may be used by the processor to identify or determine the object's contour points in 3D space, ultimately allowing it to generate an accurate interest virtual box for use in vehicle control and navigation. By analyzing contour points in multiple layers, the processor may form a more accurate 3D representation of external objects, allowing the autonomous driving system to understand their shape and orientation better. Further, breaking down the 3D space into 2D layers may simplify the process of analyzing and modeling the environment, making it easier for the autonomous driving system to manage and track objects over time.

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver when the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein. One or more features associated with autonomous driving control may be activated based on configured autonomous driving control setting(s) (e.g., based on at least one of: an autonomous driving classification, a selection of an autonomous driving level for a vehicle, etc.).

Based on one or more features (e.g., features of interest virtual box) described herein, an operation of the vehicle may be controlled. The vehicle control may include various operational controls associated with the vehicle (e.g., autonomous driving control, sensor control, braking control, braking time control, acceleration control, acceleration change rate control, alarm timing control, forward collision warning time control, etc.).

One or more auxiliary devices (e.g., engine brake, exhaust brake, hydraulic retarder, electric retarder, regenerative brake, etc.) may also be controlled, for example, based on one or more features (e.g., features of interest virtual box) described herein.

One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., features of interest virtual box) described herein.

Minimum risk maneuver (MRM) operation(s) may also be controlled, for example, based on one or more features (e.g., features of interest virtual box) described herein. A minimal risk maneuvering operation (e.g., a minimal risk maneuver, a minimum risk maneuver) may be a maneuvering operation of a vehicle to minimize (e.g., reduce) a risk of collision with surrounding vehicles in order to reach a lowered (e.g., minimum) risk state. A minimal risk maneuver may be an operation that may be activated during autonomous driving of the vehicle when a driver is unable to respond to a request to intervene. During the minimal risk maneuver, one or more processors of the vehicle may control a driving operation of the vehicle for a set period of time.

Biased driving operation(s) may also be controlled, for example, based on one or more features (e.g., features of interest virtual box) described herein. A driving control apparatus may perform a biased driving control. To perform a biased driving, the driving control apparatus may control the vehicle to drive in a lane by maintaining a lateral distance between the position of the center of the vehicle and the center of the lane. For example, the driving control apparatus may control the vehicle to stay in the lane but not in the center of the lane. The driving control apparatus may identify a biased target lateral distance for biased driving control. For example, a biased target lateral distance may comprise an intentionally adjusted lateral distance that a vehicle may aim to maintain from a reference point, such as the center of a lane or another vehicle, during maneuvers such as lane changes.

This adjustment may be made to improve the vehicle's stability, safety, and/or performance under varying driving conditions, etc. For example, during a lane change, the driving control system may bias the lateral distance to keep a safer gap from adjacent vehicles, considering factors such as the vehicle's speed, road conditions, and/or the presence of obstacles, etc. One or more sensors (e.g., IMU sensors, camera, LIDAR, RADAR, blind spot monitoring sensor, line departure warning sensor, parking sensor, light sensor, rain sensor, traction control sensor, anti-lock braking system sensor, tire pressure monitoring sensor, seatbelt sensor, airbag sensor, fuel sensor, emission sensor, throttle position sensor, inverter, converter, motor controller, power distribution unit, high-voltage wiring and connectors, auxiliary power modules, charging interface, etc.) may also be controlled, for example, based on one or more features (e.g., features of interest virtual box) described herein.

An operation control for autonomous driving of the vehicle may include various driving control of the vehicle by the vehicle control device (e.g., acceleration, deceleration, steering control, gear shifting control, braking system control, traction control, stability control, cruise control, lane keeping assist control, collision avoidance system control, emergency brake assistance control, traffic sign recognition control, adaptive headlight control, etc.).

In S1007, the vehicle control method according to an example may include an operation of performing validation on the interest virtual box based on at least one of a heading direction of the interest virtual box within a designated frame, a location of the interest virtual box, the first distribution, or the second distribution, or any combination thereof.

In S1009, the vehicle control method according to an example may include an operation of determining whether to output the interest virtual box, based on the validation on the interest virtual box.

The operation of determining whether to output the interest virtual box based on the validation on the interest virtual box may be associated with the operations of FIG. 9.

For example, the vehicle control method may include an operation of determining whether to output the interest virtual box, based on whether an angle between a first heading direction of the interest virtual box in a (t-1)-th frame and a second heading direction of the interest virtual box in a t-th frame exceeds a designated angle.

For example, the vehicle control method may include an operation of determining whether to output the interest virtual box corresponding to the external object, based on whether the external object is driving in a straight line.

For example, the vehicle control method may include an operation of identifying or determining that the external object is driving in the straight line, based on an absolute longitudinal speed of the external object being greater than or equal to a designated speed, and a representative point included in the interest virtual box being moving in a specific direction along a specific trajectory during a plurality of frames.

For example, the vehicle control method may include an operation of performing validation on the heading direction of the interest virtual box based on hysteresis of the interest virtual box.

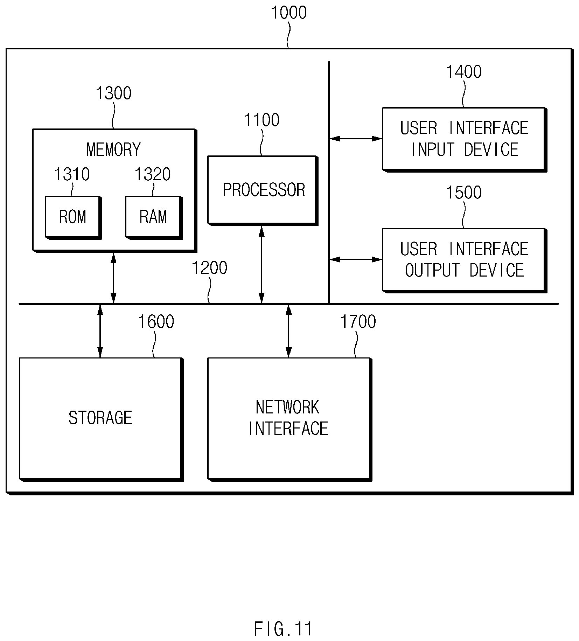

FIG. 11 shows an example of a computing system associated with a vehicle control apparatus or vehicle control method, according to an example of the present disclosure.

Referring to FIG. 11, a computing system 1000 may include at least one processor 1100, a memory 1300, a user interface input device 1400, a user interface output device 1500, storage 1600, and a network interface 1700, which are connected with each other via a bus 1200.

The processor 1100 may be a central processing device (CPU) or a semiconductor device that processes instructions stored in the memory 1300 and/or the storage 1600. The memory 1300 and the storage 1600 may include various types of volatile or non-volatile storage media. For example, the memory 1300 may include a ROM (Read Only Memory) 1310 and a RAM (Random Access Memory) 1320.

Accordingly, the processes of the method or algorithm described in relation to the examples of the present disclosure may be implemented directly by hardware executed by the processor 1100, a software module, or a combination thereof. The software module may reside in a storage medium (that is, the memory 1300 and/or the storage 1600), such as a RAM, a flash memory, a ROM, an EPROM, an EEPROM, a register, a hard disk, solid state drive (SSD), a detachable disk, or a CD-ROM. The exemplary storage medium is coupled to the processor 1100, and the processor 1100 may read information from the storage medium and may write information in the storage medium. In another method, the storage medium may be integrated with the processor 1100. The processor 1100 and the storage medium may reside in an application specific integrated circuit (ASIC) . The ASIC may reside in a user terminal. In another method, the processor 1100 and the storage medium may reside in the user terminal as an individual component.

The present disclosure was made to solve the above-mentioned problems occurring in the prior art while advantages achieved by the prior art are maintained intact.

An example of the present disclosure provides a vehicle control apparatus for accurately identifying or determining a heading direction of a virtual box corresponding to an external object identified by a LiDAR, and a method thereof.

An example of the present disclosure provides a vehicle control apparatus for preventing the heading of a specialty vehicle and an object including noise from being output abnormally, and a method thereof.

An example of the present disclosure provides a vehicle control apparatus for stably controlling a vehicle by accurately determining and outputting the virtual box corresponding to the external object, and a method thereof.

The technical problems to be solved by the present disclosure are not limited to the aforementioned problems, and any other technical problems not mentioned herein will be clearly understood from the following description by those skilled in the art to which the present disclosure pertains.

According to an example of the present disclosure, a vehicle control apparatus may include a light detection and ranging (LiDAR) that obtains virtual boxes respectively corresponding to a plurality of external objects, and a processor. The processor may determine an interest virtual box among the virtual boxes based on at least one of an operating state of a vehicle, a location of an external object, or a size of a virtual box corresponding to the external object, or any combination thereof, may identify or determine a first distribution in a first coordinate system of contour points forming the interest virtual box in the first coordinate system centered on the interest virtual box, may identify or determine a second distribution in a second coordinate system of the contour points in the second coordinate system centered on the contour points, may perform validation on the interest virtual box based on at least one of a heading direction of the interest virtual box within a designated frame, a location of the interest virtual box, the first distribution, or the second distribution, or any combination thereof, and may determine whether to output the interest virtual box, based on the validation.

In an example, the processor may form the second coordinate system based on a minimum x-value of a vehicle coordinate system of contour points, a minimum y-value of the vehicle coordinate system, a maximum x-value of the vehicle coordinate system, and a maximum y-value of the vehicle coordinate system. The vehicle coordinate system may be formed to be centered on the vehicle.

In an example, the processor may determine the interest virtual box based on the vehicle being driving in a straight line, the virtual box being located within a region of interest (ROI), a width of the virtual box exceeding a first length, and a length of the virtual box exceeding a second length. For example, an ROI may comprise a specific area within an image, video, or dataset that may be selected for detailed analysis or processing, for example, due to its relevance to the task at hand.

In an example, the processor may identify or determine the virtual box corresponding to the external object within the ROI, which is spaced from a front of the vehicle by a first distance and which is spaced from a side of the vehicle by a second distance.

In an example, the processor may form the first coordinate system based on an angle between the heading direction of the interest virtual box and a vehicle coordinate system centered on the vehicle.

In an example, the processor may determine whether to output the interest virtual box, based on whether an angle between a first heading direction of the interest virtual box in a (t-1)-th frame and a second heading direction of the interest virtual box in a t-th frame exceeds a designated angle.

In an example, the processor may determine whether to output the interest virtual box corresponding to the external object, based on whether the external object is driving in a straight line.

In an example, the processor may identify or determine that the external object is driving in the straight line, based on an absolute longitudinal speed of the external object being greater than or equal to a designated speed, and a representative point included in the interest virtual box being moving in a specific direction along a specific trajectory during a plurality of frames.

In an example, the processor may identify or determine at least one of the first distribution, or the second distribution, or any combination thereof in each of layers, of which a number is a designated number and which include the interest virtual box, from among a plurality of layers formed based on a z-axis among an x-axis, a y-axis, and the z-axis.

In an example, the processor may perform validation on the heading direction of the interest virtual box based on hysteresis of the interest virtual box.

According to an example of the present disclosure, a vehicle control method may include determining, by a processor, an interest virtual box among virtual boxes based on at least one of an operating state of a vehicle, a location of an external object, or a size of a virtual box corresponding to the external object, or any combination thereof, identifying or determining a first distribution in a first coordinate system of contour points forming the interest virtual box in the first coordinate system centered on the interest virtual box, identifying or determining a second distribution in a second coordinate system of the contour points in the second coordinate system centered on the contour points, performing validation on the interest virtual box based on at least one of a heading direction of the interest virtual box within a designated frame, a location of the interest virtual box, the first distribution, or the second distribution, or any combination thereof, and determining whether to output the interest virtual box, based on the validation.

According to an example, the vehicle control method may include forming the second coordinate system based on a minimum x-value of a vehicle coordinate system of contour points, a minimum y-value of the vehicle coordinate system, a maximum x-value of the vehicle coordinate system, and a maximum y-value of the vehicle coordinate system. The vehicle coordinate system may be formed to be centered on the vehicle.

According to an example, the vehicle control method may include determining the interest virtual box based on the vehicle being driving in a straight line, the virtual box being located within an ROI, a width of the virtual box exceeding a first length, and a length of the virtual box exceeding a second length.

According to an example, the vehicle control method may include identifying or determining the virtual box corresponding to the external object within the ROI, which is spaced from a front of the vehicle by a first distance and which is spaced from a side of the vehicle by a second distance.

According to an example, the vehicle control method may include forming the first coordinate system based on an angle between the heading direction of the interest virtual box and a vehicle coordinate system centered on the vehicle.

According to an example, the vehicle control method may include determining whether to output the interest virtual box, based on whether an angle between a first heading direction of the interest virtual box in a (t-1)-th frame and a second heading direction of the interest virtual box in a t-th frame exceeds a designated angle.

According to an example, the vehicle control method may include determining whether to output the interest virtual box corresponding to the external object, based on whether the external object is driving in a straight line.

According to an example, the vehicle control method may include identifying or determining that the external object is driving in the straight line, based on an absolute longitudinal speed of the external object being greater than or equal to a designated speed, and a representative point included in the interest virtual box being moving in a specific direction along a specific trajectory during a plurality of frames.

According to an example, the vehicle control method may include identifying or determining at least one of the first distribution, or the second distribution, or any combination thereof in each of layers, of which a number is a designated number and which include the interest virtual box, from among a plurality of layers formed based on a z-axis among an x-axis, a y-axis, and the z-axis.

According to an example, the vehicle control method may include performing validation on the heading direction of the interest virtual box based on hysteresis of the interest virtual box.

Hereinabove, although the present disclosure has been described with reference to examples and the accompanying drawings, the present disclosure is not limited thereto, but may be variously modified and altered by those skilled in the art to which the present disclosure pertains without departing from the spirit and scope of the present disclosure claimed in the following claims.

Therefore, the examples of the present disclosure are provided to explain the spirit and scope of the present disclosure, but not to limit them, so that the spirit and scope of the present disclosure is not limited by the examples. The scope of the present disclosure should be construed on the basis of the accompanying claims, and all the technical ideas within the scope equivalent to the claims should be included in the scope of the present disclosure.

The above description is merely an example of the technical idea of the present disclosure, and various modifications and modifications may be made by one skilled in the art without departing from the characteristic of the present disclosure.

Accordingly, examples of the present disclosure are intended not to limit but to explain the technical idea of the present disclosure, and the scope and spirit of the present disclosure is not limited by the above examples. The scope of protection of the present disclosure should be construed by the attached claims, and all equivalents thereof should be construed as being included within the scope of the present disclosure.

The present technology may accurately identify or determine a heading direction of a virtual box corresponding to an external object identified by a LiDAR.

Moreover, the present technology may prevent the heading of a specialty vehicle and an object including noise from being output abnormally.

Furthermore, the present technology may stably control a vehicle by accurately determining and outputting the virtual box corresponding to the external object.

Besides, a variety of effects directly or indirectly understood through the present disclosure may be provided.

Hereinabove, although the present disclosure was described with reference to examples and the accompanying drawings, the present disclosure is not limited thereto, but may be variously modified and altered by those skilled in the art to which the present disclosure pertains without departing from the spirit and scope of the present disclosure claimed in the following claims.

## Claims

1. An apparatus for controlling autonomous driving of a vehicle, the apparatus comprising:
a sensor configured to obtain virtual boxes respectively corresponding to a plurality of external objects; and
a processor configured to:
determine an interest virtual box among the virtual boxes based on at least one of an operating state of the vehicle, a location of an external object, or a size of a virtual box corresponding to the external object;
determine a first distribution of contour points, in a first coordinate system, that forms the interest virtual box, wherein the first coordinate system is centered on the interest virtual box;
determine a second distribution of the contour points, in a second coordinate system, wherein the second coordinate system is centered on the contour points;
validate the interest virtual box based on at least one of a heading direction of the interest virtual box within a designated frame, a location of the interest virtual box, the first distribution, or the second distribution;
determine, based on the validation, whether to output the interest virtual box;
generate a signal indicating the interest virtual box; and
control, based on the signal, the autonomous driving of the vehicle.

2. The apparatus of claim 1, wherein the processor is configured to:
form the second coordinate system based on a minimum value of x-axis of a vehicle coordinate system of the contour points, a minimum value of y-axis of the vehicle coordinate system, a maximum value the x-axis of the vehicle coordinate system, and a maximum value of the y-axis of the vehicle coordinate system, and
wherein the vehicle coordinate system is configured to be centered on the vehicle, wherein the x-axis corresponds to a longitudinal axis of the vehicle, and wherein the y-axis is perpendicular to the x-axis and corresponds to a transverse axis of the vehicle.

3. The apparatus of claim 1 or 2, wherein the processor is configured to:
determine the interest virtual box based on the vehicle being driven in a straight line, the virtual box being located within a region of interest (ROI), a width of the virtual box exceeding a first length, and a length of the virtual box exceeding a second length.

4. The apparatus of claim 3, wherein the processor is configured to:
determine the virtual box corresponding to the external object within the ROI, wherein the ROI is spaced from a front of the vehicle by a first distance and spaced from a side of the vehicle by a second distance.

5. The apparatus of anyone of claims 1-4, wherein the processor is configured to:
form the first coordinate system based on an angle between the heading direction of the interest virtual box and a vehicle coordinate system centered on the vehicle.

6. The apparatus of anyone of claims 1-5, wherein the processor is configured to:
determine whether to output the interest virtual box based on an angle between a first heading direction of the interest virtual box in a frame and a second heading direction of the interest virtual box in a next frame exceeding a designated angle.

7. The apparatus of anyone of claims 1-6, wherein the processor is configured to:
determine, based on the external object driving in a straight line, whether to output the interest virtual box, wherein the interest virtual box corresponds to the external object.

8. The apparatus of claim 7, wherein the processor is configured to:
determine that the external object is driving in the straight line based on an absolute longitudinal speed of the external object being greater than or equal to a designated speed and a representative point included in the interest virtual box moving in a specific direction along a specific trajectory during a plurality of frames.

9. The apparatus of anyone of claims 1-8, wherein a plurality of layers are formed by planes parallel to a x-y plane, wherein the x-y plane is formed by x-axis and y-axis, wherein the x-axis corresponds to a longitudinal axis of the vehicle and perpendicular to the y-axis, wherein the y-axis corresponds to a transverse axis of the vehicle, wherein a number of the plurality of layers is a designated number, wherein the plurality of layers comprise the interest virtual box, and wherein the processor is configured to:
identify at least one of the first distribution in each of the plurality of layers or the second distribution in each of the plurality of layers.

10. The apparatus of anyone of claims 1-9, wherein the processor is configured to:
validate, based on hysteresis of the interest virtual box, the heading direction of the interest virtual box.

11. A method performed by an apparatus for controlling autonomous driving of a vehicle, the method comprising:
determining an interest virtual box among virtual boxes based on at least one of an operating state of the vehicle, a location of an external object, or a size of a virtual box corresponding to the external object, wherein the virtual boxes correspond to a plurality of external objects;
determining a first distribution of contour points, in a first coordinate system, that form the interest virtual box, wherein the first coordinate system is centered on the interest virtual box;
determining a second distribution of the contour points, in a second coordinate system, wherein the second coordinate system is centered on the contour points;
validating the interest virtual box based on at least one of a heading direction of the interest virtual box within a designated frame, a location of the interest virtual box, the first distribution; and
determining, based on the validation, whether to output the interest virtual box;
generating a signal indicating the interest virtual box; and
controlling, based on the signal, the autonomous driving of the vehicle.

12. The method of claim 11, further comprising:
forming the second coordinate system based on a minimum value of x-axis of a vehicle coordinate system of the contour points, a minimum value of y-axis of the vehicle coordinate system, a maximum value of the x-axis of the vehicle coordinate system, and a maximum value the y-axis of the vehicle coordinate system,
wherein the vehicle coordinate system is configured to be centered on the vehicle, and wherein the x-axis corresponds to a longitudinal axis of the vehicle, and wherein the y-axis is perpendicular to the x-axis and corresponds to a transverse axis of the vehicle.

13. The method of claim 11 or 12, further comprising:
determining the interest virtual box based on the vehicle being driven in a straight line, the virtual box being located within a region of interest (ROI), a width of the virtual box exceeding a first length, and a length of the virtual box exceeding a second length.

14. The method of claim 13, further comprising:
determining the virtual box corresponding to the external object within the ROI, wherein the ROI is spaced from a front of the vehicle by a first distance and spaced from a side of the vehicle by a second distance.

15. The method of anyone of claims 11-14, further comprising:
forming the first coordinate system based on an angle between the heading direction of the interest virtual box and a vehicle coordinate system centered on the vehicle.
